# EUROPEAN PATENT APPLICATION

(11) **EP 1 829 828 A1**
(43) Date of publication of application: **05.09.2007**
(21) Application number: 05809741.1
(22) Date of filing: 21.11.2005
(51) Int. Cl.: C02F 3/12

(54) **METHOD OF TREATING MILBEMYCIN COMPOUND AND ABERMECTIN COMPOUND WITH ACTIVE SLUDGE**

(30) Priority: 22.11.2004 JP 2004337555
(71) Applicant: Lifetech Animal Health Co., Ltd., Tokyo 113-0033 (JP)
(72) Inventor: KOJIMA, Shunshi Daiichi Sankyo Company Ltd., Hiratsuka-shi, Kanagawa 254-0014 (JP)
(74) Representative: Vossius & Partner
(86) International application number: PCT/JP2005/021329
(87) International publication number: WO 2006/054738

(57) **Abstract**

The present invention provides a method for treating industrial wastewater containing milbemycin compounds or avermectin compounds such as a culture filtrate generated after microbial production of milbemycins and avermectins efficiently, safety and at low running costs. This method removes milbemycin compounds or avermectin compounds by treating industrial wastewater containing at least one compound selected from the group consisting of milbemycin compounds and avermectin compounds with active sludge.

## Description

### Technical Field

The present invention relates to a method for treating industrial wastewater, and particularly a culture filtrate, generated as a result of biosynthesis of milbemycins and avermectins by microbial culturing, and as a result of manufacturing agricultural chemicals or veterinary drugs from them, using active sludge.

### BACKGROUND ART

Milbemycins and avermectins are 16-member ring macrolide antibiotics produced by microorganisms of the genus Streptomyces, and are known to have insecticidal, miticidal and antihelminthic activities. Examples of milbemycins include those compounds listed in the table below.

| | | |
|---|---|---|
| 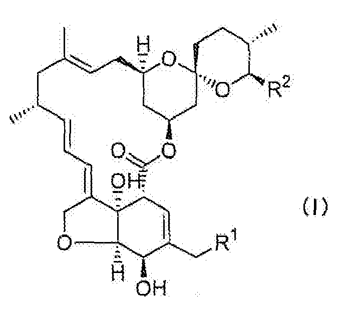 | | |

| R¹ | R² | compound |
|---|---|---|
| H | CH₃ | Milbemycin A₃ |
| H | C₂H₅ | Milbemycin A₄ |
| H | i-C₃H₇ | Milbemycin D |
| 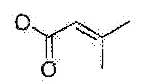 | CH₃ | Milbemycin α₁₁ |
| 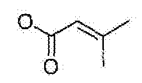 | C₂H₅ | Milbemycin α₁₄ |

In addition, examples of avermectins include abamectin, doramectin, eprinomectin and ivermectin.
Production of these milbemycins and avermectins has been carried out by culturing bacteria belonging to the genus Streptomyces, separating the bacterial cells from the culture solution, extracting the produced milbemycins or avermectins from the bacterial cells with an organic solvent, and purifying the resulting substance containing the target compound. In addition, various types of semisynthetic milbemycin compounds and avermectin compounds have also been synthesized by inserting functional groups, substituting functional groups and so forth in the milbemycins and avermectins produced by bacteria in this manner (Patent Reference 1-11).

On the other hand, it is necessary to treat culture filtrates after separating bacterial cells from culture solutions and industrial wastewater, such as wastewater generated during manufacturing agricultural chemicals and veterinary drugs from produced milbemycins and avermectins, as waste containing milbemycins and avermectins per se, compounds derived from milbemycins or avermectins as agricultural chemicals and veterinary drugs, or production intermediates. Since these filtrates and wastewater contain produced milbemycins or avermectins as well as compounds derived from milbemycins or avermectins or production intermediates, they are highly toxic to fish and they also contain high levels of BOD and COD, and therefore they cannot be discharged directly as actual wastewater. For example, in the case of culturing on a scale of 80 m³ (titer: 3500 µg/ml), the culture filtrate after separating the milbemycin-producing organism producing a mixture of the aforementioned milbemycin A3 and milbemycin A4 from the culture solution contains the mixture of milbemycins A3 and A4 at about 15 to 20 ppm, its BOD is about 60,000 to 110,000 ppm, and its COD is about 50,000 to 100,000 ppm. The LC₅₀ in the case of contacting the aforementioned mixture of milbemycin A3 and A4 for 48 hours in a toxicity test targeted at river shrimp (*Palaemon paucidens*) is 0.014 ppm, indicating a high level of fish toxicity. Thus, the direct discharge of such a filtrate having a high level of fish toxicity is completely impossible from the perspective of protecting the natural environment.

On the other hand, known methods for treating wastewater containing hazardous substances include treatment by incineration methods, treatment using chemical and/or physical methods employing procedures such as extraction, adsorption, UV ozone degradation, alkaline treatment, heat treatment and so forth, and treatment with active sludge. Although treatment by incineration methods has typically been carried out in the case of wastewater having high BOD levels as described above, this treatment has the problem of high running costs. In this manner, the treatment using chemical and/or physical methods has high running costs and the problem of requiring new treatment equipments. In addition, as will be subsequently described, the treatment with active sludge, which has comparatively low running costs and is widely used to treat industrial wastewater, has the risk that milbemycin compounds or avermectin compounds contained in the wastewater inhibit the activity of microorganisms contained in the active sludge and thereby cause the active sludge to lose its activity. Consequently, this type of treatment cannot be used to treat wastewater directly, and, for overcoming this disadvantage, running costs are not necessarily low. In addition, since active sludge is susceptible to the effects of temperature, there is also technical bias against this method due to the risk that the adequate treatment activity can not be obtained at low temperatures, particularly during the winter.

Active sludge is a kind of ecosystem composed of bacteria such as Achromobacter, Alcaligenes, Bacillus, Bacterium, Corynebacterium, Flavobacterium, Micrococcus, Pseudomonas and so forth as well as protozoans such as fungis, molds, protozoans, rotifera, nematodes and so forth. Since bacteria and so forth composing active sludge degrade organic substances dissolved in water, the water in which the active sludge is present is purified, and therefore the active sludge is widely used for purifying water and treating sewage. But since wastewater such as culture filtrates of microorganisms that produce antibiotics inhibits the activity of the microorganisms contained in the active sludge and this causes the activity of the active sludge to be lost, the active sludge is unable to treat the water effectively. In order to solve this problem, the method has been developed in which, after active sludge inhibitory substances present in treated water are adsorbed onto active sludge and removed outside the system, the water is treated with the active sludge (Patent Reference 12). However, in this method, equipments for treating the treated water with active sludge as well as equipments for other treatments are required and thereby a considerable economic burden may be created. Furthermore, since active sludge is susceptible to the effects of temperature, there is the risk that the adequate treatment activity can not be obtained at low temperatures, particularly during the winter.

As has been described above, there is a need for a treatment method being able to treat safely and efficiently industrial wastewater containing milbemycin compounds or avermectin compounds such as culture filtrates of milbemycins and avermectins and also having low running costs. However, due to the technical bias described above, technology for treating industrial wastewater such as a culture filtrate after microbial biosynthesis of milbemycins and avermectins with active sludge has neither been attempted nor reported.
Patent Reference 1
   Japanese Unexamined Patent Publication (Kokai) No. Sho50-29742
Patent Reference 2
   Japanese Unexamined Patent Publication (Kokai) No. Sho55-131398
Patent Reference 3
   Japanese Unexamined Patent Publication (Kokai) No. Sho56-32481
Patent Reference 4
   Japanese Unexamined Patent Publication (Kokai) No. Heil-193270
Patent Reference 5
   Japanese Unexamined Patent Publication (Kokai) No. Sho60-142991
Patent Reference 6
   Japanese Unexamined Patent Publication (Kokai) No. Hei4-305579
Patent Reference 7
   Japanese Unexamined Patent Publication (Kokai) No. Hei8-193085
Patent Reference 8
   Japanese Unexamined Patent Publication (Kokai) No. Hei8-208657
Patent Reference 9
   Japanese Unexamined Patent Publication (Kokai) No. Hei8-259570
Patent Reference 10
   Japanese Unexamined Patent Publication (Kokai) No. Hei9-143183
Patent Reference 11
   Japanese Unexamined Patent publication (Kokai) No. 2002-12595
Patent Reference 12
   Japanese Unexamined Patent Publication (Kokai) No. Hei7-16589

### Disclosure of the Invention

### Problems to be Solved by the Invention

The inventors of the present invention have conducted extensive studies to find a method for treating safely and efficiently industrial wastewater containing milbemycin compounds or avermectin compounds such as culture filtrates of milbemycins and avermectins and also having low running costs. As a result, the inventors of the present invention have overcome the technical bias that industrial wastewater containing milbemycin compounds or avermectin compounds such as culture filtrates of microorganisms producing milbemycins and avermectins inhibits the activity of microorganisms contained in active sludge and thereby there is the risk to cause the active sludge to lose its activity, and consequently this type of treatment cannot be used to treat wastewater directly; for overcoming this disadvantage, running costs are not necessarily low; and in addition, since active sludge is susceptible to the effects of temperature, there is the risk that the adequate treatment activity can not be obtained at low temperatures, particularly during the winter. The inventors of the present invention have found that wastewater can be treated efficiently not only at high temperatures during the spring to fall, but also at low temperatures during the winter by treating directly industrial wastewater containing milbemycin compounds or avermectin compounds such as culture filtrates of milbemycins and avermectins, using active sludge and that the aforementioned object can be achieved, thereby leading to completion of the present invention.

### Means to Solve the Problems

The present invention relates to a method for removing milbemycin compounds or avermectin compounds by treating industrial wastewater containing at least one compound selected from the group consisting of milbemycin compounds and avermectin compounds with active sludge.

### Effect of the Invention

As a result of using the method of the present invention, industrial wastewater containing milbemycin compounds or avermectin compounds can be treated not only during high temperatures from the spring to fall, but also during low temperatures in the winter, efficiently, safely and at low running costs. In particular, the method of the present invention can also be used efficiently to treat culture filtrates containing milbemycins or avermectins generated after production of milbemycins or avermectins by microorganisms as well as wastewater generated during production of agricultural chemicals and veterinary drugs derived from milbemycins and avermectins described in the literatures such as the aforementioned patent documents 5-11.

### Brief Description of the Drawings

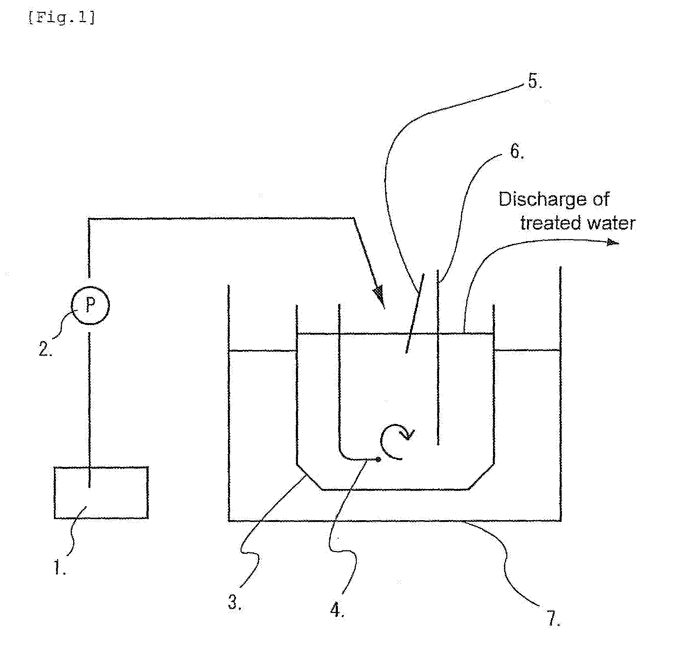

Figure 1 shows an example of the constitution of an apparatus in the case of treating continuously industrial wastewater containing milbemycin compounds or avermectin compounds with active sludge.

### Best Mode for Carrying Out the Invention

Examples of milbemycin compounds and avermectin compounds contained in industrial wastewater being able to be treated according to the method of the present invention include any arbitrary milbemycins and avermectins provided that they are milbemycins and avermectins produced by microbial culturing. In particular, examples of milbemycins include milbemycins selected from the group consisting of milbemycin A3, milbemycin A4, milbemycin D, milbemycin α11 and milbemycin α14, and particularly preferably milbemycin A3, milbemycin A4 and mixtures of milbemycin A3 and milbemycin A4 In addition, examples of avermectins include abamectin, doramectin, eprinomectin and ivermectin. In addition to milbemycins and avermectins produced by microbial culturing, other examples of milbemycin compounds and avermectin compounds contained in industrial wastewater being able to be treated according to the method of the present invention include compounds derived from milbemycins or avermectins as agricultural chemicals and veterinary drugs, and 5-oxo forms or epoxy forms of milbemycins or avermectins. The following indicates examples of such compounds. In the formulae below, R¹ represents a hydrogen atom or a group of -OCO-CH=C(CH₃)₂ and R² represents a methyl, ethyl or isopropyl group.

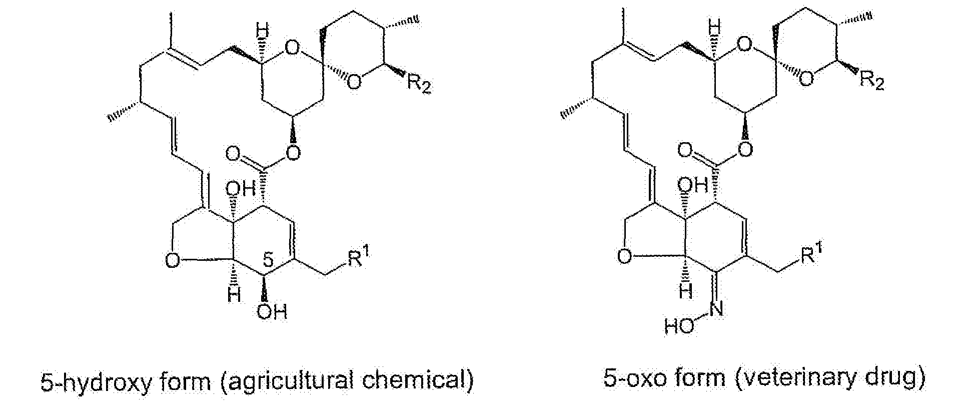

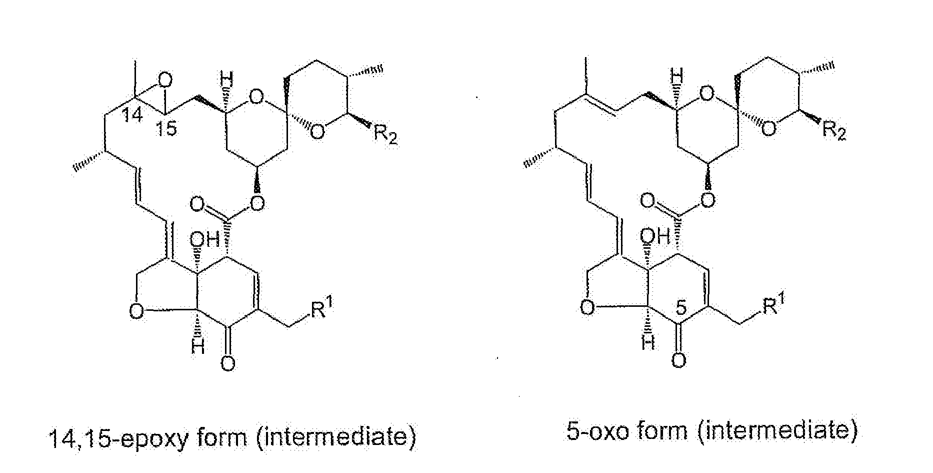

Industrial wastewater containing at least one compound selected from the group consisting of milbemycin compounds and avermectin compounds being able to be treated according to the method of the present invention refers to any arbitrary wastewater provided that it is wastewater that contains at least one compound selected from the group consisting of milbemycin compounds and avermectin compounds, examples of which include a culture filtrate containing at least one compound selected from the group consisting of milbemycins and avermectins; and industrial wastewater being generated during production of agricultural chemicals and veterinary drugs derived from milbemycins and avermectins and also containing at least one compound selected from the group consisting of milbemycins and avermectins, compounds derived from milbemycins and avermectins and production intermediates such as 5-oxo forms and epoxy forms of milbemycins and avermectins.
A culture filtrate containing at least one compound selected from the group consisting of milbemycins and avermectins refers to a culture filtrate after culturing Streptomyces species of microorganisms having the ability to produce milbemycins or avermectins and removing the cake containing microbial cells. This culture filtrate contains about 15 to 20 ppm of milbemycins or avermectins under ordinary culturing conditions. In addition, the BOD value of such a filtrate is about 60,000 to 110,000 ppm, and the COD value is about 50,000 to 100,000 ppm. Since these values are extremely high, there are cases in which it is necessary to dilute the filtrate to lower the BOD and COD values to a degree to be able to be treated with active sludge before treating with active sludge. Although water can be used for dilution, miscellaneous wastewater generally discharged from a factory and so forth can be used provided that it does not have any toxicity in particular. The filtrate can be treated efficiently if the concentration of milbemycins or avermectins contained in the filtrate after dilution is within the range of 0.16 to 10.7 ppm. In the case of treating the filtrate directly with active sludge as wastewater, the concentrations of milbemycins and avermectins are 0.3 ppm or less and preferably 0.1 to 0.2 ppm.
In addition, it is also necessary to dilute waste-water generated during production of agricultural chemicals and veterinary drugs derived from milbemycins and avermectins to a degree to be able to be treated with active sludge before treating with active sludge for the same reasons as described above. This wastewater can be efficiently treated if the concentration of milbemycin compounds or avermectin compounds contained in the wastewater after dilution is within the range of 0.16 to 10.7 ppm. In the case of treating wastewater directly with active sludge, the concentrations of milbemycin compounds and avermectin compounds are 0.3 ppm or less and preferably 0.1 to 0.2 ppm.

There are no particular limitations on the active sludge microorganisms used in the method of the present invention and active sludge microorganisms typically used to treat wastewater can be used, examples of which include Schizomycetes such as Zoogloea species (such as *Zoogloea ramigera*), *Sphaerotilus* natans, *Beggiatoa alba* and *Thioploca* species, and preferably Zoogloae species (such as *Zoogloea ramigera*)*.*

The working concentration of the active sludge varies depending on the concentration of milbemycin compounds or avermectin compounds contained in the wastewater after dilution and on the treatment temperature. Normally, the working concentration for wastewater such as a diluted filtrate containing 0.1 to 0.2 ppm of milbemycin compounds or avermectin compounds is 4,000 to 16,000 ppm, preferably 6,000 to 14,000 ppm and more preferably 8,000 to 12,000 ppm. Furthermore, although treatment is efficient even if the working concentration of the active sludge exceeds 16,000 ppm, a concentration of 16,000 ppm or less is suitable under consideration of economy.

The treatment temperature of the present invention is normally 5 to 35°C, preferably 8 to 30°C and more preferably 10 to 25°C. In addition, although the treatment time (residence time) of the present invention varies depending on the treatment temperature, it is normally 5 to 48 hours, preferably 10 to 30 hours and more preferably 16 to 24 hours. Furthermore, although treatment is efficient even if the treatment time exceeds 48 hours, treatment time of 48 hours or less is suitable under consideration of economy.

The treatment pH of the present invention is 6 to 8 and preferably 7. In addition, the dissolved oxygen concentration is normally 0.1 ppm to the saturated dissolved oxygen concentration, and preferably 0.2 ppm to the saturated dissolved oxygen concentration.

In the treatment method of the present invention, equipments and methods used for ordinary wastewater active sludge treatment can be used to treat wastewater such as a diluted culture filtrate with active sludge. Either batch treatment or continuous treatment can be used for the treatment conditions.

With respect to batch treatment, for example, wastewater such as a culture filtrate containing 15 to 20 ppm of milbemycin compounds or avermectin compounds is diluted with miscellaneous wastewater by about 75 to 200 times to bring the concentration of milbemycin compounds or avermectin compounds contained in the wastewater to 0.1 to 0.2 ppm ; and the wastewater is treated using active sludge normally having a concentration of 4,000 to 16,000 ppm (preferably 6,000 to 12,000 ppm and more preferably 8,000 ppm) to the diluted wastewater by agitating normally at a temperature of 5 to 35°C (preferably 8 to 30°C and more preferably 10 to 25°C) for normally 5 to 48 hours (preferably 16 to 24 hours and more preferably 20 to 24 hours), while blowing air in the wastewater so that the dissolved oxygen concentration is normally 0.1 ppm to the saturated dissolved oxygen concentration (and preferably 0.2 ppm to the saturated dissolved oxygen concentration).

On the other hand, with respect to continuous treatment, for example, wastewater such as a culture filtrate containing milbemycin compounds or avermectin compounds is diluted with miscellaneous wastewater to bring the concentration of milbemycin compounds or avermectin compounds in the wastewater to 0.1 to 0.2 ppm; the diluted wastewater is filled into an active sludge treatment tank; active sludge is added to the active sludge treatment tank so that the concentration of active sludge in the diluted wastewater is normally 4,000 to 16,000 ppm (preferably 6,000 to 14,000 ppm and more preferably 8,000 to 12,000 ppm); and the diluted wastewater is continuously injected into the active sludge treatment tank at a set injection rate so as to achieve a predetermined residence time. Since the inside of the active sludge treatment tank is aerated, wastewater injected into the active sludge treatment tank is agitated by aeration. In addition, oxygen may also be supplied so that the dissolved oxygen concentration is normally 0.1 ppm to the saturated dissolved oxygen concentration (and preferably 0.2 ppm to the saturated dissolved oxygen concentration). After being treated for a predetermined duration (residence time), the wastewater overflows from the active sludge treatment tank by passing through the lower portion of a partition plate, is discharged and undergoes subsequent treatment by being pumped to a contact oxidation treatment tank. The temperature is maintained by a constant temperature tank normally at 5 to 35°C (preferably 8 to 30°C and more preferably 20 to 25°C during the spring to fall and 8 to 10°C during the winter). The treatment (residence) time of active sludge treatment is normally 5 to 48 hours (preferably 10 to 30 hours, more preferably 16 to 24 hours, and particularly preferably 16 to 20 hours from spring to fall and 20 to 24 hours during the winter). In addition, the treatment (residence) time can be adjusted by adjusting the injection rate of the diluted wastewater into the active sludge treatment tank.
An example of the constitution of an apparatus in the case of continuous treatment is shown in Figure 1.

In the constitution of the apparatus shown in Figure 1, charged water (1) as diluted wastewater is sent to an active sludge treatment tank (3) by a pump (2) where it remains for a fixed period of time in the active sludge treatment tank (3) and undergoes degradation treatment by active sludge, while being aerated with air supplied from a diffuser (4). Subsequently, the treated wastewater overflows by passing under a partition plate (6) and is sent to a contact oxidation treatment tank. In addition, the active sludge treatment tank (3) is arranged within a constant temperature tank (7) and maintained at a constant temperature. (1: charged water, 2: pump, 3: active sludge treatment tank, 4: diffuser, 5: thermometer, 6: partition plate, 7 : constant temperature tank).

The batch treatment and continuous treatment can both be carried out on a scale at which ordinary wastewater active sludge treatment is carried out.

Milbemycin compounds or avermectin compounds can be efficiently removed by treating wastewater such as a culture filtrate with active sludge according to the method described above.

In the following examples, the method of the present invention is explained in detail.

### Example 1

Active Sludge Treatment by Batch Treatment
Active sludge having a surplus sludge concentration of about 20, 000 ppm used mainly to treat ordinary wastewater (sanitation wastewater, miscellaneous wastewater and so forth) was diluted to adjust the concentration thereof and used.
A milbemycin A3/A4 culture filtrate was diluted with miscellaneous wastewater to bring the concentration of milbemycin A3/A4 to 0.16 ppm.

Furthermore, the TOC value of the diluted filtrate was 747 ppm. In addition, the concentration of the milbemycin A3/A4 was measured using high-performance liquid chromatography (column: TSK gel 80Ts (4.6φ x 75 mm), Shimadzu Corp., mobile phase : methanol/water/triethylamine /acetic acid = 924/75/1/1) and the TOC value was measured by combustion-non-dispersive infrared gas analysis using the TOC analyzer (TOC-5000A, Shimadzu Corp.).

100 ml of the diluted filtrate having a milbemycin A3/A4 concentration of 0.16 ppm prepared as described above were added to a 300 ml Erlenmeyer flask equipped with a baffle. Active sludge was then added to the filtrate to bring the active sludge concentration to 6000 ppm, the pH was adjusted to 7 and the filtrate was treated with the active sludge at 25°C for 24 hours by agitating and attaining a dissolved oxygen concentration of 0.2 ppm or more using an agitator equipped with a constant temperature tank. The supernatant obtained by separating centrifugally the treated solution was separated from the active sludge by decanting, and the milbemycin A3/A4 concentration and the TOC value were measured to determine the removal rates from the resulting values.

Active sludge treatment was repeated under the same conditions as the above, and the milbemycin A3/A4 concentration and TOC value of the treated supernatant were measured to determine the removal rates from the resulting values. This procedure was continuously repeated daily for 1 week.

Next, 100 ml of the diluted filtrate containing 0.34 ppm of the milbemycin A3/A4 were added to the active sludge being continuously repeatedly treated daily for 1 week as described above and separated. The filtrate was treated with this active sludge under the same conditions as described above, and the milbemycin A3/A4 concentration and TOC value of the supernatant obtained by separating centrifugally the treated solution were measured to determine the removal rates from the resulting values. This procedure was continuously repeated daily for 1 week.

Moreover, the diluted filtrate containing the milbemycin A3/A4 was added to the aforementioned separated active sludge after each week, diluted filtrates in which the milbemycin A3/A4 concentration was 0.75 ppm, 1.3 ppm, 6.9 ppm or 10.7 ppm were treated using the same procedure as the aforementioned repeated treatment, and the milbemycin A3/A4 concentrations and TOC values for each concentration of diluted filtrate after the active sludge treatment were measured to determine the removal rates from the resulting values.

In addition, the diluted filtrate having a milbemycin A3/A4 concentration of 0.16 ppm was treated with active sludge under the same conditions as described above at a treatment temperature of 10°C, and the milbemycin A3/A4 concentration and TOC value of the treated supernatant were measured to determine removal rates.

The milbemycin A3/A4 concentrations and TOC values before and after the treatment, and the average values of their respective removal rates for each concentration before the treatment are shown in Table 1.

**Table 1 (25°C)**

| Milbemycin A3/A4 | | | TOC | | |
|---|---|---|---|---|---|
| Pre-treatment concentrations (ppm) | Post-treatment concentrations (ppm) | Removal rates (%) | Pre-treatment concentrations (ppm) | Post-treatment concentrations (ppm) | Removal rates (%) |
| 0.16 | 0.0058 | 96.4 | 747.2 | 59.8 | 92.0 |
| 0.34 | 0.016 | 95.3 | 748.3 | 41.2 | 94.5 |
| 0.75 | 0.048 | 93.6 | 723.1 | 47.0 | 93.5 |
| 1.3 | 0.0078 | 99.4 | 690.1 | 65.6 | 90.5 |
| 6.9 | 0.083 | 98.8 | 748.7 | 37.4 | 95.0 |
| 10.7 | 0.011 | 99.9 | 760.4 | 41.8 | 94.5 |

**Table 2 (10°C)**

| Milbemycin A3/A4 | | | TOC | | |
|---|---|---|---|---|---|
| Pre-treatment concentration (ppm) | Post-treatment concentration (ppm) | Removal rate (%) | Pre-treatment concentration (ppm) | Post-treatment concentration (ppm) | Removal rate (%) |
| 0.16 | 0.014 | 91.3 | 782.4 | 99.4 | 87.3 |

According to the above results, TOC was removed at a rate of 90% or more even under the maximum load concentration of 10.7 ppm at a temperature of 25°C, and as a result of adding milbemycin A3/A4 as a substrate each week, the removal rates of milbemycin A3/A4 attributable to the active sludge were indicated to increase. In addition, microscopic observation of the active sludge after the treatment confirmed that bell animalcules, which appear when the state of the active sludge is good, were in an aggregated state without the occurrence of molds and dead microorganisms, and that the sludge had formed a solid flock. On the basis of these findings, treatment of a filtrate containing milbemycin A3/A4 was found not to impair the active sludge. In addition, according to the results of treating only a filtrate containing milbemycin A3/A4 at a concentration of 0.16 ppm at a low temperature of 10°C as well, the TOC removal rate was 87.3% and the milbemycin A3/A4 removal rate was 91.3%, and although the treatment performance decreased slightly due to the low temperature, no impairment of the active sludge was found.

An examination of the material balance based on the sludge treated finally at all concentrations and treated water revealed that the recovered amount milbemycin A3/A4 in all of the treated water was 2 mg (recovery rate: 1.6%) based on the total charged amount of milbemycin A3/A4 (100%) and that moreover, the concentration of milbemycin A3/A4 in the final active sludge was 0.03 mg (recovery rate: 0.3 %), and therefore the milbemycin A3/A4 was confirmed not to accumulate in the active sludge, and the clearance of the milbemycin A3/A4 was 98.1%. Based on the above results, it is found that the milbemycin A3/A4 was biodegraded by the active sludge not only at high temperatures but also at low temperatures without impairing the active sludge and that the treatment activity of the milbemycin A3/A4 with active sludge was observed to increase as a result of supplying additionally milbemycin A3/A4 at intermediate points in the treatment process.

### Example 2

Active Sludge Treatment by Continuous Treatment
The same active sludge as in Example 1 was used.
A milbemycin A3/A4 culture filtrate was diluted with miscellaneous wastewater to bring the concentration of milbemycin A3/A4 to 0.16 ppm and this was used as charged water. The milbemycin A3/A4 concentration and TOC value in this charged water were measured using the same methods as in Example 1. Treatment was started in an active sludge treatment tank (1.24 liters) at an active sludge concentration of 10,000 ppm to the tank, and the concentration of the active sludge was subsequently maintained at 10,000 to 12,000 ppm. The injection rate of the charged water into the active sludge treatment tank was adjusted so that the residence time in the active sludge treatment tank was 20 hours in the case of presuming treatment from spring to fall (injection rate: 0.062 liters/hr) or 24 hours in the case of presuming treatment during the winter (injection rate: 0.052 liters/hr). The charged water was pumped to the active sludge treatment tank at the above injection rates with a pump, the pH was adjusted to 7, and the water was treated continuously with the active sludge at a constant temperature, while aerating by injecting air with an air pump so that the dissolved oxygen concentration was 0.2 ppm or more. After a predetermined residence time, a small volume of sample was collected from the treated water, the supernatant obtained by centrifugal separation was separated by decanting, and the milbemycin A3/A4 concentration and TOC value were measured to determine the respective removal rates from the resulting values. The treatments were carried out at a temperature of 20 to 25°C corresponding to the treatment during spring to fall, and at 8 to 10°C corresponding to the treatment during winter.

The milbemycin A3/A4 concentrations and TOC values before and after the treatment, and the average values of their respective removal rates are shown in Tables 3 and 4.

**Table 3 Removal Rates from Spring to Fall (%)**

| Treatment temperature: 20 to 25°C, Residence time: 20 hours, Treatment time: 1.5 months | | | | | |
|---|---|---|---|---|---|
| Milbemycin A3/A4 | | | TOC | | |
| Concentration in charged water (ppm) | Post-treatment concentration (ppm) | Removal rate (%) | Concentration in charged water (ppm) | Post-treatment concentration (ppm) | Removal rate (%) |
| 0.16 | 0.004 | 97.5 | 920.2 | 64.4 | 93.0 |

**Table 4 Removal Rates During Winter (%)**

| Treatment temperature: 8 to 10°C, Residence time: 24 hours, Treatment time: 1,5 months | | | | | |
|---|---|---|---|---|---|
| Milbemycin A3/A4 | | | TOC | | |
| Concentration in charged water (ppm) | Post-treatment concentration (ppm) | Removal rate (%) | Concentration in charged water (ppm) | Post-treatment concentration (ppm) | Removal rate (%) |
| 0.16 | 0.018 | 88.8 | 920.2 | 133.4 | 85.5 |

### Example 3

Milbemycins were produced from microorganisms, and the agricultural chemical and veterinary drug were produced from the produced milbemycins. Industrial water containing the agricultural chemical, veterinary drug and intermediates formed during production thereof were diluted with miscellaneous wastewater, and diluted water containing 1 or 10 ppm based on the total amounts of these compounds was prepared. The chemical formulae of these structures are shown below.

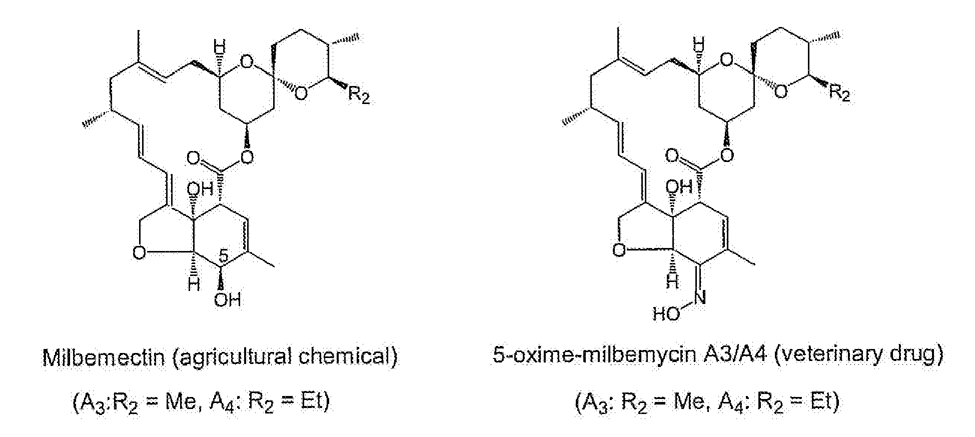

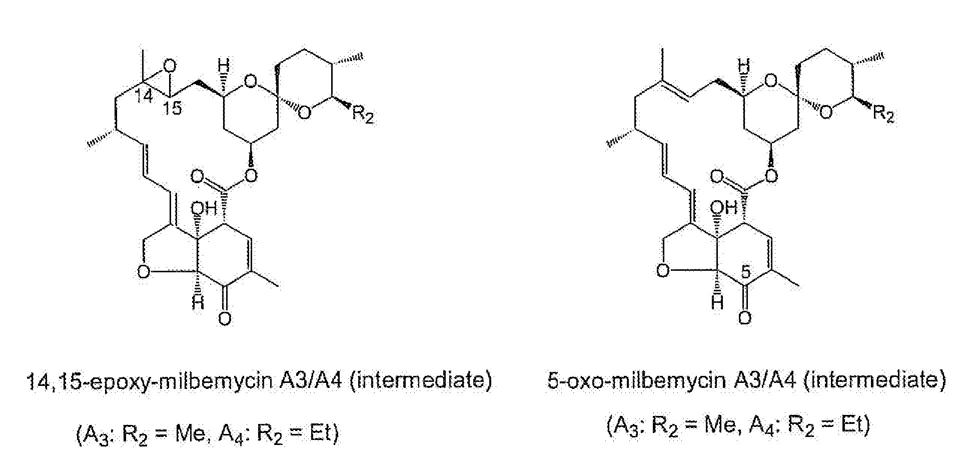

20 liters of the aforementioned diluted water were added to a 20 liter active sludge treatment tank, and the same active sludge as that used in Example 1 was added to the diluted water at a concentration of 10,000 ppm. After the pH was adjusted to 7, batch treatment was carried out at a temperature of 20°C for 24 hours, while the dissolved oxygen concentration was maintained at 0.2 ppm or more by aeration. After the treatment, the active sludge was removed from the treated water and groups of 10 *Oryzias latipes* each were bred for 72 hours at 25°C in the treated water after removal of the active sludge. In addition, *Oryzias* latipes were also bred under the same conditions in the diluted water before the treatment (containing 1 or 10 ppm as the total amount of the aforementioned compounds).
After 72 hours, all of *Oryzias latipes* in the group bred in the diluted water containing 10 ppm of the aforementioned compounds died, while all of *Oryzias latipes* in the any groups bred in the diluted water treated with active sludge survived, and no abnormalities were observed in the surviving groups of *Oryzias latipes.* In addition, measurement of the BOD values of the diluted water containing these compounds before and after the treatment with an automated BOD analyzer (Ohkura Electric Co., Ltd.) revealed that the BOD removal rates by this treatment were 95% or more. In addition, microscopic observation of the state of the active sludge after treatment indicated no dead microorganisms and these compounds were found not to impair the active sludge.
According to these results, by using the method of the present invention, industrial wastewater containing milbemycin compounds generated when deriving agricultural chemicals and veterinary drugs from milbemycins and industrial wastewater containing intermediates thereof in the form of 5-oxo forms and epoxy forms were able to be treated efficiently and safely.

### Example 4

Active sludge treatment was carried out for 24 hours under the same conditions as in Example 3 using diluted wastewater containing 10 ppm of 5-oxime-milbemycin A3/A4 instead of the diluted wastewater containing the agricultural chemical and veterinary drug produced from milbemycin A3/A4 and intermediates thereof in Example 3 and O*ryzias latipes* were bred in the treated water under the same condition as in Example 3. As a result, all of *Oryzias latipes* were confirmed to have survived after 72 hours. In addition, the BOD removal rates by the active sludge treatment were 95% or more.

### Example 5

Active sludge treatment was carried out for 24 hours under the same conditions as in Example 3 using diluted wastewater containing 10 ppm of 14,15-epoxymilbemycin A3/A4 instead of the diluted wastewater containing the agricultural chemical and veterinary drug produced from milbemycin A3/A4 and intermediates thereof in Example 3 and *Oryzias latipes* were bred in the treated water under the same condition as in Example 3. As a result, all of *Oryzias latipes* were confirmed to have survived after 72 hours. In addition, the BOD removal rates by the active sludge treatment were 95% or more.

### Example 6

Active sludge treatment was carried out for 24 hours under the same conditions as in Example 3 using diluted wastewater containing 10 ppm of 5-hydroxymilbemycin A3/A4 instead of the diluted wastewater containing the agricultural chemical and veterinary drug produced from milbemycin A3/A4 and intermediates thereof in Example 3 and O*ryzias latipes* were bred in the treated water under the same condition as in Example 3. As a result, all of *Oryzias latipes* were confirmed to have survived after 72 hours. In addition, the BOD removal rates by the active sludge treatment were 95% or more.

### Industrial Applicability

By using the method of the present invention, industrial wastewater containing milbemycin compounds or avermectin compounds such as a culture filtrate generated after microbial production of milbemycins and avermectins, can be treated efficiently, safely and at low running costs.

## Claims

1. A method for removing milbemycin compounds or avermectin compounds by treating industrial wastewater containing at least one compound selected from the group consisting of milbemycin compounds and avermectin compounds with active sludge.

2. The method according to claim 1, wherein the industrial wastewater containing at least one compound selected from the group consisting of milbemycin compounds and avermectin compounds is a culture filtrate containing at least one compound selected from the group consisting of milbemycins and avermectins,

3. The method according to claim 1, wherein the industrial wastewater containing at least one compound selected from the group consisting of milbemycin compounds and avermectin compounds is industrial wastewater containing at least one compound selected from the group consisting of milbemycins and avermectins; compounds derived from milbemycins and avermectins; and 5-oxo forms and epoxy forms of milbemycins and avermectins.

4. The method according to claim 2 or 3, wherein the milbemycins are selected from the group consisting of milbemycin A3, milbemycin A4, milbemycin D, milbemycin α11 and milbemycin α14.

5. The method according to claim 2 or 3, wherein the milbemycins are selected from the group consisting of milbemycin A3, milbemycin A4 or mixtures of milbemycin A3 and milbemycin A4.

6. The method according to claim 2 or 3, wherein the avermectins are selected from the group consisting of abamectin, doramectin, eprinomectin and ivermectin.

7. The method according to any of claims 1 to 6, wherein the active sludge treatment is carried out at a temperature of 5 to 35°C.

8. The method according to any of claims 1 to 7, wherein the active sludge treatment is carried out for 5 to 48 hours.

9. The method according to any of claims 1 to 8, wherein the active sludge treatment is carried out at a pH of 6 to 8.
